Europäisches Patentamt

European Patent Office.

Office européen des brevets

(11) Publication number: **0 089 649**
**B1**

## EUROPEAN PATENT SPECIFICATION

(45) Date of publication of patent specification: **02.08.89**

(51) Int. Cl.⁴: **H 04 B 15/06, H 04 B 1/50**

(21) Application number: **83102720.6**

(22) Date of filing: **18.03.83**

(54) Radio transmitter/receiver.

(30) Priority: **18.03.82 JP 43966/82**

(43) Date of publication of application:
**28.09.83 Bulletin 83/39**

(45) Publication of the grant of the patent:
**02.08.89 Bulletin 89/31**

(84) Designated Contracting States:
**DE FR GB**

(56) References cited:
**FR-A- 932 631**
**US-A-4 225 828**
**US-A-4 231 116**
**REVIEW OF THE ELECTRICAL COMMUNICATION LABORATORIES, vol. 25, no. 11,12, November-December 1977, pages 1231-1243, Tokyo, JP; M. SAKAMOTO et al.: "Mobile unit for 800 MHz band land mobile telephone system"**

**The file contains technical information submitted after the application was filed and not included in this specification**

(73) Proprietor: **NEC CORPORATION**
**33-1, Shiba 5-chome, Minato-ku**
**Tokyo 108 (JP)**

(72) Inventor: **Fukumura, Yukio**
**Nippon Electric Co., Ltd. 33-1, Shiba Gochome**
**Minato-ku Tokyo (JP)**

(74) Representative: **Sajda, Wolf E., Dipl.-Phys.**
**MEISSNER, BOLTE & PARTNER**
**Widenmayerstrasse 48 Postfach 86 06 24**
**D-8000 München 86 (DE)**

(56) References cited:
**IEEE TRANSACTIONS ON CONSUMER ELECTRONICS, vol. CE-24, no. 1, February 1978, pages 24-32, IEEE, New York, US; E. BREEZE: "A new design technique for digital PLL synthesizers"**

Courier Press, Leamington Spa, England.

## Description

The invention relates to a radio transmitter/receiver comprising: a transmitter; a superheterodyne receiver; and a local oscillator for supplying the transmitter and the receiver with local signals at a plurality of frequencies, wherein the transmitter and the receiver operate on a plurality of radio channels with different transmission and reception frequencies for each channel, and wherein the transmission and reception frequencies are natural number multiples of the frequency spacing between the radio channels.

As the number of mobile radio transmitter/receivers has increased in recent years, interference is caused in an increasing manner by unwanted radiations from such radio transmitter/receivers. In particular, the interference due to unwanted radiations from the local oscillator of such a transmitter/receiver raises a series problem because interfering waves are constantly radiated once power is supplied to the radio transmitter/receiver. For example, in a multi-channel type radio transmitter/receiver in which one channel is used as a control channel and the other channels are used as talking channels, when the control channel is interfered with unwanted radiation from a radio transmitter/receiver of its own system or another system, the performance of this system will be adversely affected. Especially, when the interference is caused by a moving radio transmitter/receiver, it is difficult to find out a source of interference.

Heretofore, in the receivers operating at VHF and UHF bands, intermediate frequencies have been used which are integer multiples of a frequency spacing of 20 kHz or 25 kHz of radio channels of 10,7 MHz, 21,4 MHz, 45 MHz and 70 MHz. The frequencies of the radio channels have also been integer multiples of the frequency spacing. Accordingly, the frequencies of the local oscillators have been integer multiples of the frequency spacings so that when local oscillation waves are radiated from a local oscillator, other radio devices would be interfered with.

A radio transmitter/receiver as specified above is known from the document Review of the Electrical Communication Laboratories, volume 25, numbers 11—12, November/December 1977, pages 1231 to 1243. While such a device is suitable for several applications not all problems in practice are solved thereby when it is intended to minimize interferences.

Document FR—A—932 631 discloses a radio transmitter/receiver, comprising a transmitter, a superheterodyne receiver, and a local oscillator for supplying a local oscillation signal to the superheterodyne receiver wherein it is desired to stabilize the frequencies of the receiver and transmitter. However, no attention is paid to the problem of minimizing interferences as explained above. Especially, none of these documents provides for positioning the local oscillator frequencies between the respective transmitting frequencies so that these local oscillator frequencies do not interfere with any of the radio channel frequencies.

Namely, the object underlying the invention is to provide for an improved radio transmitter/receiver capable of preventing interference with any other radio device caused by undesired radiation from the local oscillator of such a radio transmitter/receiver. Another object of the invention is to provide a radio transmitter/receiver capable of readily determining a transmission frequency. Also, it should not be necessary to provide any additional transmission oscillator.

The radio transmitter/receiver according to the invention is characterized in that the output frequencies of the local oscillator are between the transmission frequencies of two adjacent channels in case of the reception, and in that the superheterodyne receiver comprises mixing means for mixing an output signal from the local oscillator with a reception frequency to provide an intermediate frequency $f_{if}$ wherein the intermediate frequency $f_{if}$ of the superheterodyne receiver is set to have a value expressed by

$$f_{if}=(2K-1)\times f_{ch}/2$$

wherein $f_{ch}$ represents a frequency spacing between radio frequencies assigned to adjacent channels, and $K$ represents a natural number.

With such a structure of the radio transmitter/receiver according to the invention the problem is solved in a satisfying manner wherein the respective local oscillation frequencies do not coincide with any of the radio channel frequencies so that the interference problems are minimized as desired.

According to a further development of the invention the radio transmitter/receiver is characterized in that the local oscillator comprises a digital frequency synthesizer, and an output signal of the local oscillator is supplied to the transmitter.

According to a further feature of the radio transmitter/receiver according to the invention the output frequency of the local oscillator is varied by an odd multiple $f_{ch}/2$ in order to obtain a transmission frequency.

The invention will be described in detail below with respect to a preferred embodiment and with reference to the accompanying drawings, in which

Fig. 1 is a block diagram showing a preferred embodiment of this invention;

Fig. 2 is a graph showing an attenuation/frequency characteristic of the embodiment shown in Fig. 1; and

Fig. 3 is a graph showing a frequency spectrum of the embodiment shown in Fig. 1.

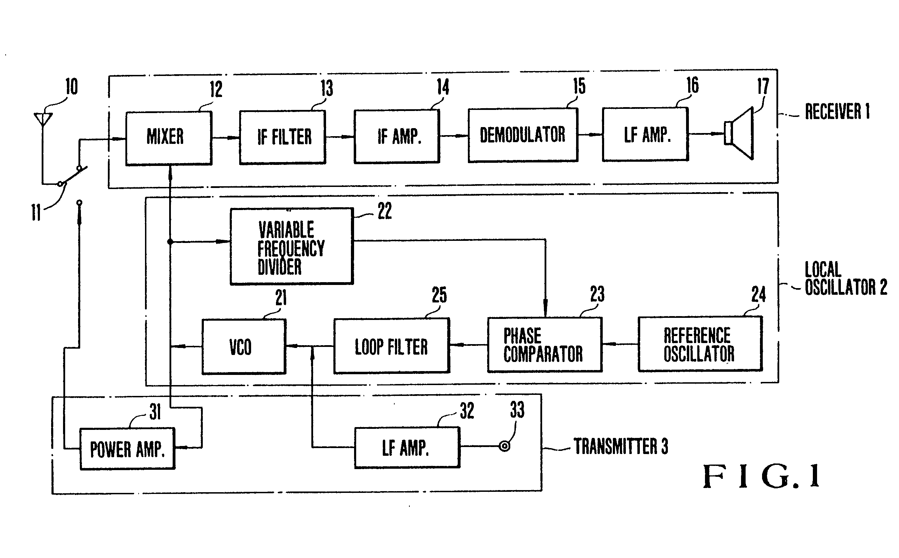

A preferred embodiment of this invention shown in Fig. 1 comprises a receiver 1, a local oscillator 2 utilizing a digital frequency synthesizer, and a transmitter 3.

A radio wave received by an antenna 10 is supplied to a mixer 12 through an antenna duplexer 11. The mixer 12 mixes together the local oscillation wave of the local oscillator 2 and the received wave to form an intermediate frequency signal. Unwanted signals in the intermediate frequency signal are removed by an intermediate frequency filter 13 and then the intermediate signal is amplified by an intermediate frequency amplifier 14 and demodulated by a demodulator 15. The demodulated signal is amplified by a low frequency amplifier 16 and then supplied to a loudspeaker 17 to produce a voice. Thus, the receiver 1 is of a wellknown superheterodyne type.

The local oscillator 2 is constituted by a digital frequency synthesizer as shown in Fig. 1. In the local oscillator 2, the frequency of the output of a voltage controlled oscillator (VCO) 21 is divided by a variable frequency divider 22 whose output is supplied to a phase comparator 23 to be compared with the output frequency of a reference oscillator 24, and the phase error is applied to the voltage controlled oscillator 21 through a loop filter 25.

In the transmitter 3, a voice signal produced by a microphone 33 is amplified by a low frequency amplifier 32 and then supplied to the voltage controlled oscillator 21 to effect frequency modulation. The output of the voltage controlled oscillator 21, that is, the output of the local oscillator 2 is amplified to a predetermined power level by a power amplifier 31 whose output is radiated through the antenna 10 via the antenna duplexer 11.

With the above construction, according to the present invention, the intermediate frequency $f_{if}$ of the superheterodyne receiver is set to be odd multiples of half the frequency spacing $f_{ch}$ between channel frequencies, and can be expressed by,

$$f_{if}=(2K-1)\times f_{ch}/2$$

where $K$ represents a natural number.

The local oscillator 2 in the form of the digital frequency synthesizer is advantageous because the digital frequency synthesizer is easy to change frequency division so that the intermediate frequency which is odd multiples of half the frequency spacing in the receiving mode can readily be switched to the transmitting frequency which is even multiples of half the frequency spacing in the transmission mode, or vice versa.

For example, let us assume that the transmission frequency is 450 MHz, the receiving frequency is 460 MHz and the frequency spacing between radio channels is 25 kHz, and that the intermediate frequency is selected to be 10,0125 MHz, an odd multiple of a frequency of 25/2 kHz. Where the lower local oscillation frequency is assumed with respect to the received frequency, the local oscillation frequency $f_L$ becomes:

$$f_L=460-10,0125 \text{ MHz}=449,9875 \text{ MHz}.$$

Where the output frequency of the reference oscillator 24 is equal to 12,5 khz the frequency division ratio N of the variable frequency divider 22 is

$$N=449,9875/025=35999$$

at the time of receiving, while at the time of transmission it becomes

$$N=450/0,0125=36000.$$

Thus, according to this invention, the local oscillation frequency $f_L$ becomes

$$f_L=449,9875 \text{ MHz}$$

which is different by 12,5 kHz from the closest radio channel frequencies 449,975 MHz and 450 MHz.

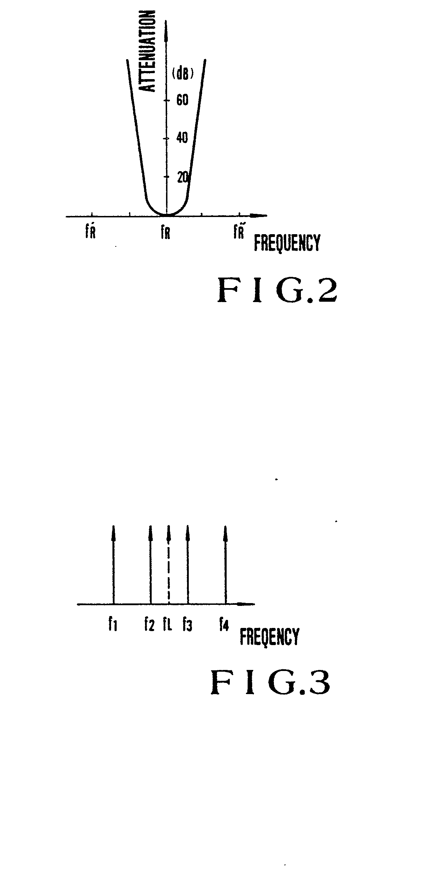

Fig. 2 shows an attenuation/frequency characteristic of the receiver 1 in which $f_R$ designates a receiving frequency, and $f'_R$ and $f''_R$ show radio channel frequencies. The ordinate shows attenuation in decibel (dB). At frequencies $f'_R$ and $f''_R$ the attenuations are sufficiently large, whereas when the receiving frequency shifts by one half the frequency spacing, attenuation of about 70 dB can ordinarily be obtained.

This amount of attenuation is common in communication receivers operating in VHF band and UHF band. For this reason, even when an interfering wave have a frequency different from the receiving frequency by one half of the frequency spacing is present, it causes no trouble. More particularly, the unwanted local oscillation frequency radiated from a radio transmitter/receiver of this invention does not coincide with the radio channel frequencies, and when it is radiated, it can be sufficiently attenuated by an intermediate frequency filter or the like of the receiver.

Fig. 3 shows the relation among radio channel frequencies $f_1$ to $f_4$ and the local oscillation frequency $f_L$ of this invention. As shown, the local oscillation frequency $f_L$ is positioned between radio channel frequencies $f_2$ and $f_3$.

As described above, according to this invention, since the local oscillation frequency is positioned between two adjacent radio channel frequencies, interference which would be caused by unwanted radiation from the local oscillator can be removed at the time of receiving. Furthermore, since a digital frequency synthesizer is used for a local oscillator, a transmission frequency can readily be obtained by varying the ratio of frequency division at the time of receiving. This makes it unnecessary to use an independent oscillator for transmission, thereby simplifying the construction of a multi-channel type radio transmitter/receiver.

**Claims**

1. A radio transmitter/receiver comprising:
—a transmitter (3),
—a superheterodyne receiver (1), and

—a local oscillator (2) for supplying the transmitter (3) and the receiver (1) with local signals at a plurality of frequencies,

wherein the transmitter (3) and the receiver (1) operate on a plurality of radio channels with different transmission and reception frequencies for each channel, and wherein the transmission and the reception frequencies are natural number multiples of the frequency spacing between the radio channels,

characterized in that the output frequencies of the local oscillator (2) are between the transmission frequencies of two adjacent channels in case of the reception,

and in that the superheterodyne receiver (1) comprises mixing means (12) for mixing an output signal from the local oscillator (2) with a reception frequency to provide an intermediate frequency $f_{if}$ wherein the intermediate frequency $f_{if}$ of the superheterodyne receiver (1) is set to have a value expressed by

$$f_{if}=(2K-1)\times f_{ch}/2$$

wherein $f_{ch}$ represents a frequency spacing between radio frequencies assigned to adjacent channels, and $K$ represents a natural number.

2. The radio transmitter/receiver according to claim 1, characterized in that the local oscillator (2) comprises a digital frequency synthesizer, and an output signal of the local oscillator (2) is supplied to the transmitter (3).

3. The radio transmitter/receiver according to claim 1 or 2, characterized in that the output frequency of the local oscillator (2) is varied by an odd multiple of $f_{ch}/2$ in order to obtain a transmission frequency.

**Patentansprüche**

1. Funksenderempfänger, umfassend:
—einen Sender (3),
—einen Superhet-Empfänger (1), und
—einen Überlagerungsoszillator (2), um den Sender (3) und den Empfänger (1) bei einer Vielzahl von Frequenzen mit Überlagerungssignalen zu versorgen,

wobei der Sender (3) und der Empfänger (1) auf einer Vielzahl von Funkkanälen mit verschiedenen Sende- und Empfangsfreqeuenzen für jeden Kanal arbeiten, und wobei die Sende- und Empfangsfrequenzen Vielfache von natürlichen Zahlen des Frequenzabstandes zwischen den Funkkanälen sind,

dadurch gekennzeichnet, daß die Ausgangsfrequenzen des Überlagerungsoszillators (2) im Falle des Empfangs zwischen den Empfangsfrequenzen von zwei benachbarten Kanälen liegen,

und daß der Superhet-Empfänger (1) eine Mischeinrichtung (12) aufweist, um ein Ausgangssignal vom Überlagerungsoszillator (2) mit einer Empfangsfrequenz zu mischen, um eine Zwischenfrequenz $f_{if}$ zu liefern, wobei die Zwischenfrequenz $f_{if}$ des Superhet-Empfängers (1) so vorgegeben ist, daß sie einen Wert hat, der ausgedrückt wird durch

$$f_{if}=(2K-1)\times f_{ch}/2,$$

wobei $f_{ch}$ einen Frequenzabstand zwischen Funkfrequenzen repräsentiert, die benachbarten Kanälen zugeordnet sind, und $K$ eine natürliche Zahl darstellt.

2. Funksenderempfänger nach Anspruch 1, dadurch gekennzeichnet, daß der Überlagerungsoszillator (2) einen digitalen Frequenzsynthesizer aufweist und daß ein Ausgangssignal des Überlagerungsoszillators (2) dem Sender (3) geliefert wird.

3. Funksenderempfänger nach Anspruch 1 oder 2, dadurch gekennzeichnet, daß die Ausgangsfrequenz des Überlagerungsoszillators (2) mit einem ungeraden Vielfachen von $f_{ch}/2$ variiert wird, um eine Sendefrequenz zu erhalten.

**Revendications**

1. Emetteur-récepteur de radio comprenant:
—un émetteur (3);
—un récepteur superhétérodyne (1) et
—un oscillateur local (2) pour fournir à l'émetteur (3) et au récepteur (1) des signaux locaux à une multitude de fréquences,

dans lequel l'émetteur (3) et le récepteur (1) fonctionnent sur une multitude de canaux radio avec des fréquences différentes d'émission et de réception pour chaque canal, et dans lequel les fréquences d'émission et de réception sont des nombres naturels multiples de l'espacement en fréquence entre les canaux radio, caractérisé en ce que:

—les fréquences de sortie de l'oscillateur local (2) sont comprises entre les fréquences d'émission de deux canaux adjacents dans le cas de la réception, et en ce que:

—le récepteur superhétérodyne (1) comprend un moyen de mélange (12) pour mélanger un signal sortant de l'oscillateur local (2) à une fréquence de réception afin de fournir une fréquence intermédiaire $f_{if}$ où la fréquence intermédiaire $f_{if}$ du récepteur superhétérodyne (1) est réglée de manière à avoir une valeur répondant à la formule:

$$f_{if}=(2K-1)\times f_{ch}/2$$

dans laquelle $f_{ch}$ représente un espacement de fréquence entre les fréquences radio affectées à des canaux adjacents, et $K$ est un nombre naturel.

2. Emetteur-récepteur radio selon la revendication 1, caractérisé en ce que l'oscillateur local (2) comprend un synthétiseur de fréquence numérique, et un signal de sortie de l'oscillateur local (2) est fourni à l'émetteur (3).

3. Emetteur-récepteur radio selon la revendication 1 ou 2, caractérisé en ce que la fréquence de sortie de l'oscillateur local (2) varie d'un multiple impair de $f_{ch}/2$ de manière à obtenir une fréquence d'émission.

FIG.1

EP 0 089 649 B1

F I G.2

F I G.3

2